# EUROPÄISCHE PATENTSCHRIFT

(11) **EP 2 371 455 B1**
(45) Veröffentlichungstag und Bekanntmachung des Hinweises auf die Patenterteilung: **12.04.2017**
(21) Anmeldenummer: 11005054.9
(22) Anmeldetag: 29.12.2006
(51) Int. Cl.: G01N 31/16, G01N 31/18, B01L 3/02

(54) **System und Verfahren zum Titrieren von Flüssigkeiten**
System and method for titrating fluids
Système et procédé destinés au titrage de liquides

(30) Priorität: 28.02.2006 DE 102006009816
(43) Veröffentlichungstag der Anmeldung: 05.10.2011
(62) Teilanmeldung aus: 06027038.6
(73) Patentinhaber: Eppendorf AG, 22339 Hamburg (DE)
(72) Erfinder: Köhn, Heinz-Gerhard, 22397 Hamburg (DE); Andres, Karl-Friedrich, 22941 Bargteheide (DE)
(74) Vertreter: Hauck Patentanwaltspartnerschaft mbB

(56) Entgegenhaltungen:
- EP-A- 0 576 967
- EP-A- 0 657 216
- EP-A- 0 691 158
- DD-A1- 267 331
- DE-A1- 2 617 346
- DE-A1- 19 723 852
- US-A- 2 650 256
- US-A- 4 563 907
- US-A- 4 821 586
- US-A- 5 002 737
- US-A1- 2003 099 578

## Beschreibung

Die Erfindung bezieht sich auf ein System und auf ein Verfahren zum Titrieren von Flüssigkeiten.

Die Titrimetrie oder Maßanalyse ist ein Bestimmungsverfahren der chemischen Analyse, bei dem die zu bestimmende gelöste Substanz (Titrant) mit einer weiteren, ebenfalls meist in Lösung befindlichen Substanz bekannter Konzentration (Titrans, Titrierflüssigkeit, Maßlösung) bis zu einem Endpunkt, Äquivalenzpunkt oder Zielpunkt (nachfolgend zusammenfassend "Endpunkt" genannt) umgesetzt wird. Der Bestimmungsvorgang heißt Titration. Der Endpunkt wird z.B. durch ein Indikatorsystem angezeigt oder auf elektrochemischem Weg oder anhand einer Fällungsreaktion erkannt.

Zur Abmessung der Maßlösung wird herkömmlicherweise die Bürette eingesetzt. Bekannt ist ferner ein Dosiersystem, das zu Titrationszwecken einsetzbar ist. Dieses hat eine als Handgerät ausgeführte Dosiervorrichtung, in die eine Spritze für die Aufnahme und Abgabe von Flüssigkeit einsetzbar ist. Für die Bestückung der Dosiervorrichtung gibt es Spritzen mit verschiedenen Nennvolumina. Das Dosiersystem ist in einen Titriermodus schaltbar, der sich dadurch auszeichnet, daß die Geschwindigkeit des Spritzenkolbens bzw. der abgegebene Mengenstrom bei jedem Abgabeschritt automatisch um eine Stufe verringert wird, um ein genaues Titrieren zu ermöglichen. Schließlich bleibt die Geschwindigkeit auf der untersten Stufe konstant.

Bei den bisherigen Titriersystemen besteht das Risiko, daß bei versehentlicher, falscher Vorgehensweise im Bereich des Endpunktes zuviel Flüssigkeit abgegeben werden kann. Auch wenn mit dem bekannten Dosiersystem in der Nähe des Endpunktes ein geringer Mengenstrom abgegeben wird, kann es vorkommen, daß der Endpunkt verfehlt wird. Beispielsweise wird das Erreichen des Endpunktes zu spät erkannt, weil sich Titrant und Titrans nicht sogleich homogen vermischen und umsetzen. Außerdem benötigt der Anwender vom Erkennen des Endpunktes bis zum Loslassen der Auslösetaste eine Reaktionszeit, während der weiteres Titrans zuströmt und der Endpunkt überschritten werden kann. Bei Benutzung der Dosiervorrichtung mit Spritzen, die unterschiedliche Nennvolumina aufweisen, können die abgegebenen Mengenströme bei einem bestimmten Abgabeschritt sehr unterschiedlich sein. Die Verwendung verschiedener Spritzen kann ebenfalls das Ermitteln des Endpunktes erschweren.

Wird der Endpunkt z.B. im Rahmen einer pH-Einstellung für eine ungepufferte oder schwach gepufferte Lösung verfehlt, so kann der Korrekturaufwand sehr zeitintensiv sein. Auch ist es möglich, daß Korrekturen zu einer Verdünnung der interessierenden Komponente(n) in der zu bearbeitenden Lösung führen, die für die folgenden Arbeitsschritte zu hoch ist. Die titrierte Lösung muß dann verworfen werden. Wird bei einer analytischen Aufgabe der Endpunkt überschritten, kann mitunter der wahrscheinliche Endpunkt durch Interpolation gefunden werden. Ist dies nicht möglich oder aufgrund von Verfahrensvorgaben nicht erlaubt, muß die Titration mit einer weiteren Probe wiederholt werden.

Die US 4,563,907 beschreibt ein Dosiersystem, welches automatisch das Volumen der eingesetzten Spritze ermittelt. Ferner wird diese Information dafür verwendet, die für die Abgabe eines bestimmten Volumens erforderliche Verlagerung des Spritzenkolbens und Antriebsparameter des Schrittmotors zum Verlagern des Spritzenkolbens, wie beispielsweise die Geschwindigkeit und Beschleunigung des Motors, zu errechnen.

Die EP 0 576 967 A2 beschreibt eine Pipette mit einem elektrischen Motor, der durch ein Steuersystem gesteuert einen Kolben verlagert. Ferner ist beschrieben, dass Zylinder und Kolben ausgetauscht und durch ein Modul anderer Größe ersetzt werden können, wobei der Zylinder einen seinen Volumen anzeigenden mechanischen Code in Form von Erhebungen oder Vertiefungen aufweist. Das Handgerät weist eine entsprechende mit dem Steuersystem verbundene Lesevorrichtung mit Schaltern auf.

Davon ausgehend liegt der Erfindung die Aufgabe zugrunde, ein System und Verfahren zum Titrieren zur Verfügung zu stellen, daß es ermöglicht, die Erkennung des Endpunktes der Titration zu erleichtern.

Die Aufgabe wird durch ein System mit den Merkmalen des Anspruches 1 gelöst. Vorteilhafte Ausgestaltungen des Systems sind in den Unteransprüchen 2 bis 7 angegeben.

Gemäß Anspruch 1 hat das System zum Titrieren von Flüssigkeiten
- eine Spritze oder Spitze, umfassend
- eine Halteeinrichtung und
- mindestens ein Kennzeichen,
und
- eine Dosiervorrichtung, umfassend
- eine weitere Halteeinrichtung zum Halten der Spritze oder Spitze an der Halteeinrichtung,
- eine Leseeinrichtung zum Lesen des Kennzeichens der mittels der weiteren Halteeinrichtung gehaltenen Spritze oder Spitze,
- eine einen Motor aufweisende Antriebseinrichtung, die lösbar mit einem Kolben der Spritze gekoppelt ist, wenn diese von der weiteren Halteeinrichtung gehalten ist,
- oder die mit einem Kolben gekoppelt ist, der in einem Zylinder angeordnet ist, der über eine Fluidleitung mit der Spitze verbunden ist, wenn diese von der weiteren Halteeinrichtung gehalten ist,
- eine Bedieneinrichtung zum Bedienen der Dosiervorrichtung und
- eine mit der Bedieneinrichtung, der Leseeinrichtung und der Antriebseinrichtung verbundene Steuereinrichtung, wobei die Steuereinrichtung derart ausgebildet ist, dass sie die Bewegung des Kolbens sowie die Geschwindigkeit und/oder Beschleunigung des Kolbens in Abhängigkeit vom Kennzeichen der eingesetzten Spritze oder Spitze steuert, dadurch gekennzeichnet, dass
- die Steuereinrichtung so ausgebildet ist, dass sie bei Spritzen oder Spitzen mit größerem Volumen in einigem Abstand vom Endpunkt eine geringere Geschwindigkeit und/oder eine geringere Beschleunigung des Kolbens als bei Spritzen oder Spitzen mit geringerem Volumen steuert und bei Spritzen oder Spitzen mit größerem Volumen in der Nähe des Endpunktes eine höhere Geschwindigkeit und/oder eine höhere Beschleunigung des Kolbens als bei Spritzen oder Spitzen mit geringerem Volumen steuert.

Das erfindungsgemäße System weist eine Spritze oder Spitze und eine Dosiervorrichtung auf.

Die Spritze umfaßt einen Zylinder und einen darin verschieblichen Kolben, wobei der Zylinder eine Durchgangsöffnung für Probenflüssigkeit aufweist. Bei der Spitze handelt es sich um ein Röhrchen, das insbesondere ganz oder teilweise zylindrisch und/oder konisch ausgeführt sein kann, und an einem Ende eine Durchgangsöffnung für Probenflüssigkeit und an dem anderen Ende eine Durchgangsöffnung für Luft aufweist. Die Spritze oder Spitze weist mindestens ein Kennzeichen auf, das z.B. eine Information über den jeweiligen Typ und/oder Zustand der Spritze oder Spitze enthält. Die Information betrifft z.B. das Nennvolumen und/oder die Bauart (z.B. Gestalt und/oder Abmessungen) und/oder das Material und/oder den Reinheitsgrad und/oder den Hersteller und/oder das Herstellungsdatum und/oder erfolgte Benutzungen der Spritze oder Spitze. Die Dosiervorrichtung weist eine Leseeinrichtung auf, die in der Lage ist, das Kennzeichnen der Spritze oder Spitze zu lesen, wenn diese mittels der weiteren Halteeinrichtung an der Dosiervorrichtung gehalten ist. Die Steuereinrichtung steuert die Bewegung des Kolbens in Abhängigkeit von der Betätigung der Bedieneinrichtung und des von der Leseeinrichtung gelesenen Kennzeichens.

Infolgedessen ist es möglich, die Bewegung des Kolbens z.B. an den Typ und/oder den Zustand der jeweils eingesetzten Spritze oder Spitze anzupassen. Beispielsweise kann die Geschwindigkeit und/oder die Beschleunigung und/oder die Verlagerung des Kolbens (d.h. der vom Kolben zurückgelegte Weg) auf die jeweilige Spritze oder Spitze abgestimmt werden. Insbesondere die abgegebenen Mengenströme können somit auf die jeweilige Spritze oder Spitze abgestimmt werden. So können beispielsweise die bei einem bestimmten Abgabeschritt abgegebenen Mengenströme bei Spritzen oder Spitzen verschiedener Nennvolumina übereinstimmen, was dem Anwender das Titrieren mit Spritzen oder Spitzen erleichtert, die verschiedene Nennvolumina aufweisen. Ferner ist es möglich, am Ende der Titration kleine definierte Flüssigkeitsmengen (z.B. Tröpfchen) unabhängig von der jeweils verwendeten Spritze oder Spitze abzugeben. Die Abgabe kleiner definierter Flüssigkeitsmengen erleichtert dem Anwender das Erkennen des Endpunktes. Fehler aufgrund einer Reaktionszeit des Anwenders können vermieden werden. Das System erleichtert somit dem Anwender das Erreichen des Endpunktes der Titration. Beeinträchtigungen der Ermittlung des Endpunktes einer Titration aufgrund der Verwendung unterschiedlicher Spritzen oder Spitzen entfallen.

Das Kennzeichen kann auf viele verschiedene Weisen ausgebildet sein. Insbesondere kommen beliebige Ausgestaltungen in Betracht, die mittels Sensoren bzw. Meßgrößenaufnehmern erfaßbar sind. Das Kennzeichen umfaßt z.B. einen Mikrochip und/oder einen RFID, in den Daten eingeschrieben und/oder einschreibbar sind, die von der Leseeinrichtung ausgelesen werden können.

Gemäß einer Ausgestaltung ist das Kennzeichen mechanisch und/oder optisch abtastbar. Hierbei handelt es sich beispielsweise um Erhebungen und/oder Vertiefungen einer Fläche der Spritze oder Spitze, die mechanisch und/oder optisch abtastbar sind. Die spezifische Anordnung der Erhebungen und/oder Vertiefungen bildet das Kennzeichen der jeweiligen Spritze oder Spitze. Gemäß einer weiteren Ausgestaltung ist die Leseeinrichtung eine Einrichtung zum mechanischen und/oder optischen Abtasten. Die Leseeinrichtung ist geeignet, das mechanisch und/oder optisch abtastbare Kennzeichen abzutasten. Das Kennzeichen und die Leseeinrichtung können insbesondere so ausgebildet sein, wie die Abtastflächen und Abtasteinrichtung gemäß EP 0 657 216 B1, deren diesbezügliche Offenbarung durch Bezugnahme in die vorliegende Anmeldung einbezogen ist.

Das Kennzeichen kann grundsätzlich an beliebigen Positionen der Spritze oder Spitze angeordnet sein. Gemäß einer Ausgestaltung ist es an einem Flansch der Spritze oder Spitze und/oder an einem Kolben der Spritze angeordnet. Beispielsweise sind Erhebungen und/oder Vertiefungen umlaufend auf der Oberseite eines Flansches angeordnet, wie in der EP 0 657 216 B1 beschrieben. Gemäß einem anderen Beispiel ist das Kennzeichen durch umlaufende Wulste und/oder Nuten an einem aus dem Zylinder herausstehenden Abschnitt des Kolbens gebildet.

Die Bewegung des Kolbens wird in Abhängigkeit von der jeweiligen Spritze oder Spitze in unterschiedlicher Weise beeinflußt. Gemäß einer Ausgestaltung steuert die Steuereinrichtung bei Spritzen oder Spitzen mit größerem Volumen eine geringere Geschwindigkeit und/oder eine geringere Beschleunigung und/oder eine geringere Verlagerung des Kolbens als bei Spritzen oder Spitzen mit geringerem Volumen. Dies ermöglicht es dem Anwender, auch bei größeren Spritzen mit geringen Mengenströmen abgegebener Flüssigkeit zu arbeiten, die den Mengenströmen kleinerer Spritzen oder Spitzen entsprechen. Gemäß einer anderen Ausgestaltung steuert die Steuereinrichtung bei Spritzen oder Spitzen mit größerem Volumen eine höhere Geschwindigkeit und/oder eine höhere Beschleunigung und/oder eine größere Verlagerung des Kolbens als bei Spritzen oder Spitzen mit geringerem Volumen. Dies kann z.B. sinnvoll sein, um mit größeren Spritzen Tropfen zu erzeugen. In Kombination dieser beiden Ausgestaltungen werden bei Spritzen oder Spitzen mit größerem Nennvolumen in einigem Abstand vom Endpunkt durch geringere

Geschwindigkeit des Kolbens gleich große Mengenströme abgegebener Flüssigkeit wie bei kleineren Spritzen oder Spitzen ermöglicht, und in der Nähe des Endpunktes durch schnellere bzw. stärker beschleunigte bzw. größere Bewegung des Kolbens wird die Abgabe von Tröpfchen ermöglicht.

Grundsätzlich kann das System als reines Titriersystem ausgestaltet sein. Gemäß einer Ausgestaltung ist die Steuereinrichtung in einen Titriermodus und/oder in einen Dispensiermodus und/oder in einen Pipettiermodus und/oder in einen Aspirationsmodus und/oder in einen sequentiellen Dispensiermodus schaltbar. Das solchermaßen ausgestaltete System ist in der Lage, in verschiedenen Betriebsweisen zu arbeiten. Im Dispensiermodus wird die aufgenommene Flüssigkeit in gleichen Teilvolumina schrittweise abgegeben. Jeder Schritt kann vom Anwender einzeln durch Betätigen der Betätigungseinrichtung ausgelöst werden. Möglich ist aber auch ein automatisches Dosieren, bei dem eine Betätigung der Bedieneinrichtung wiederholt einzelne Flüssigkeitsmengen automatisch abgegeben werden. Im Pipettiermodus wird eine aufgenommene Flüssigkeitsmenge in einem Schritt dosiert. Im Aspirationsmodus wird ein definiertes Volumen mehrfach hintereinander aufgenommen. Der Aspirationsmodus verläuft annähernd umgekehrt zum Dispensiermodus. Im sequentiellen Dispensiermodus werden mehrere unterschiedliche Dispensiervolumina abgegeben. Dabei sind Ausgestaltungen möglich, bei denen eine Vielzahl verschiedener Dispensiervolumina unterschiedlich definiert werden können.

Die Halteeinrichtung und die weitere Halteeinrichtung können unterschiedlich ausgeführt sein. Gemäß einer Ausgestaltung ist die Halteeinrichtung so ausgeführt wie der Befestigungsabschnitt und die weitere Halteeinrichtung so ausgeführt wie die Greifeinrichtungen des Pipettensystems gemäß EP 0 656 229 B1, deren diesbezügliche Ausführungen durch Bezugnahme in die vorliegende Anmeldung einbezogen sind.

Gemäß einer Ausgestaltung umfaßt die Halteeinrichtung einen Flansch an einem zylindrischen oder hülsenförmigen Körper der Spritze oder Spitze und/oder einem Bund am Ende eines Kolbens der Spritze. Gemäß einer weiteren Ausgestaltung umfaßt die weitere Halteeinrichtung eine Steckaufnahme der Dosiervorrichtung und mindestens einen Greifer, der aus einer die Halteeinrichtung freigebenden Position in eine die Halteeinrichtung erfassende Position innerhalb der Steckaufnahme bewegbar ist.

Die Antriebseinrichtung kann verschiedene Motoren aufweisen. Möglich sind beispielsweise Ausführungen mit pneumatischem oder hydraulischem Motor. Gemäß einer Ausgestaltung weist die Antriebseinrichtung einen Elektromotor auf. Der Elektromotor kann unterschiedlicher Bauart sein. Gemäß einer Ausgestaltung ist der Elektromotor ein Gleichstrommotor.

Gemäß einer Ausgestaltung ermittelt die Steuereinrichtung die Menge der abgegebenen Flüssigkeit. Die insgesamt in der ersten Abgabephase abgegebene Flüssigkeitsmenge kann durch Addieren der mit jedem Schritt abgegebenen großen Flüssigkeitsmengen ermittelt werden. Die in der zweiten Abgabephase insgesamt abgegebene Flüssigkeitsmenge kann durch Zählen der abgegebenen kleinen definierten Flüssigkeitsmengen ermittelt werden.

Die Ermittlung abgegebener Flüssigkeitsmengen kann auf verschiedene Weise erfolgen. Beispielsweise kann die Erfassung dadurch erfolgen, daß als Motor ein Schrittmotor verwendet wird und die Steuereinrichtung die Schritte ermittelt, die der Schrittmotor zum Verlagern des Kolbens ausführt. Anhand der Schritte und der Schrittweiten kann die Steuereinrichtung die Verlagerung des Kolbens ermitteln. Gemäß einer Ausgestaltung ist die Antriebseinrichtung und/oder der Kolben mit einem Inkrementgeber zum Ermitteln der Position des Kolbens gekoppelt und ist die Steuereinrichtung mit dem Sensor zum Abtasten des Inkrementgebers gekoppelt. Hierbei wird die tatsächliche Verlagerung der Antriebseinrichtung bzw. des Kolbens ermittelt und der Ermittlung der abgegebenen Flüssigkeitsmenge zugrunde gelegt.

Die Bedieneinrichtung kann unterschiedlich ausgeführt sein, wobei beispielsweise pneumatische oder hydraulische Schaltventile möglich sind, insbesondere in Verbindung mit einem pneumatischen oder hydraulischen Motor. Gemäß einer Ausgestaltung umfaßt die Bedieneinrichtung mindestens eine elektrische Taste und/oder elektrischen Schalter.

Verschiedene Ausführungen der Steuereinrichtungen sind möglich, beispielsweise eine pneumatische oder hydraulische Steuereinrichtung, insbesondere in Verbindung mit einem pneumatischen oder hydraulischen Motor. Gemäß einer Ausgestaltung ist die Steuereinrichtung eine elektrische Steuereinrichtung. Gemäß einer weiteren Ausgestaltung ist die Steuereinrichtung programmgesteuert. Die Steuereinrichtung weist beispielsweise einen Microcomputer oder Microcontroler auf.

Die Aufgabe wird durch ein Verfahren mit den Merkmalen des Anspruches 8 gelöst. Vorteilhafte Ausgestaltungen des Verfahrens sind in den Unteransprüchen 9 bis 11 angegeben.

Gemäß Anspruch 8 umfaßt das Verfahren zum Titrieren von Flüssigkeiten mit einem System zum Titrieren von Flüssigkeiten mit
- einer Spritze oder Spitze, umfassend
- eine Halteeinrichtung, und
- mindestens einem Kennzeichen
und
- einer Dosiervorrichtung, umfassend
- eine weitere Halteeinrichtung zum Halten der Spritze oder Spitze an der Halteeinrichtung,
- eine Leseeinrichtung zum Lesen des Kennzeichens der mittels der weiteren Halteeinrichtung gehaltenen Spritze oder Spitze,
- eine einen Motor aufweisende Antriebseinrichtung, die lösbar mit einem Kolben der Spritze gekoppelt ist, wenn diese von der weiteren Halteeinrichtung gehalten ist, oder die mit einem Kolben gekoppelt ist, der in einem Zylinder angeordnet ist, der über eine Fluidleitung mit der Spitze verbunden ist, wenn diese von der weiteren Halteeinrichtung gehalten ist,
- eine Bedieneinrichtung zum Bedienen der Dosiervorrichtung und
- eine mit der Bedieneinrichtung, der Leseeinrichtung und der Antriebseinrichtung verbundene Steuereinrichtung,
die folgenden Schritte:
- eine Spritze oder Spitze mit mindestens einem Kennzeichen wird lösbar mit einer Dosiervorrichtung verbunden,
- die Dosiervorrichtung liest mindestens ein Kennzeichen von der Spritze oder Spitze und
- die Dosiervorrichtung bewegt einen Kolben der Spritze oder einen Kolben in einem Zylinder, der mit der Spitze verbunden ist, in Abhängigkeit von einer Eingabe des Anwenders und steuert die Geschwindigkeit und/oder die Beschleunigung des Kolbens in Abhängigkeit vom Kennzeichen der eingesetzten Spritze oder Spitze,
dadurch gekennzeichnet, dass
- die Steuereinrichtung der Dosiervorrichtung bei Spritzen oder Spitzen mit größerem Volumen in einigem Abstand vom Endpunkt eine geringere Geschwindigkeit und/oder eine geringere Beschleunigung des Kolbens als bei Spritzen oder Spitzen mit geringerem Volumen steuert und bei Spritzen oder Spitzen mit größerem Volumen in der Nähe des Endpunktes eine höhere Geschwindigkeit und/oder eine höhere Beschleunigung des Kolbens als bei Spritzen oder Spitzen mit geringerem Volumen steuert.

Gemäß einer Ausgestaltung des Verfahrens tastet die Dosiervorrichtung das Kennzeichen mechanisch und/oder optisch von der Spritze oder Spitze ab. Gemäß einer Ausgestaltung des Verfahrens wird die Spritze oder Spitze mit einem das Nennvolumen und/oder die Bauart und/oder das Material und/oder den Reinheitsgrad und/oder den Hersteller und/oder das Herstellungsdatum und/oder erfolgte Benutzungen der Spritze oder Spitze betreffenden Kennzeichen versehen.

Gemäß einer Ausgestaltung wird unter einer oder mehrerer der Betriebsweisen Titriermodus, Dispensiermodus, Pipettiermodus, Aspirationsmodus und sequentieller Dispensiermodus eine Betriebsweise der Dosiervorrichtung ausgewählt.

Nachfolgend wird die Erfindung anhand der anliegenden Zeichnungen von Ausführungsbeispielen näher erläutert. In den Zeichnungen zeigen:

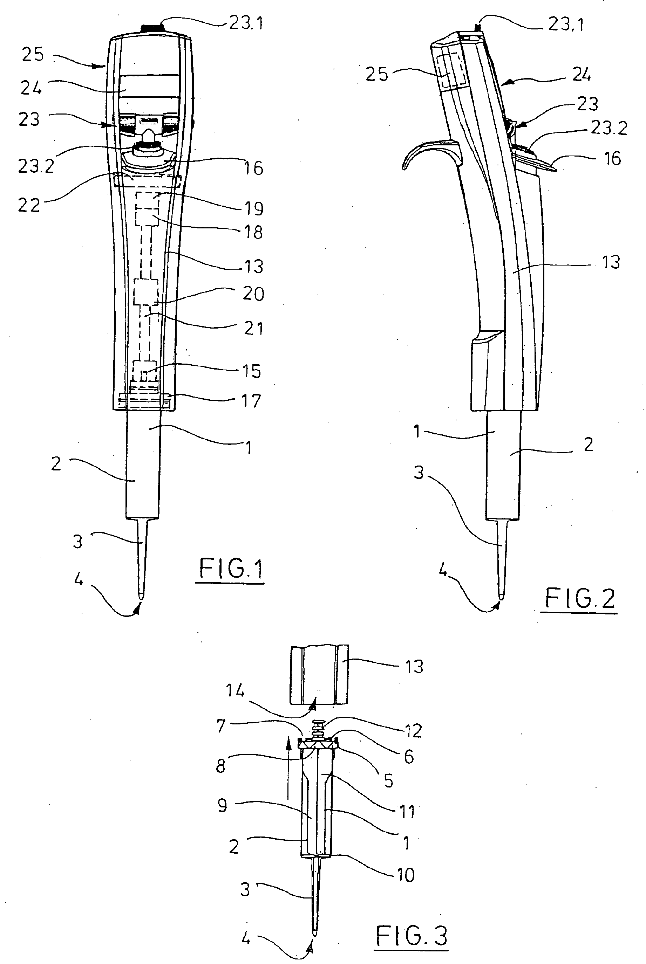

- Fig. 1: eine Spritze mit einer diese haltenden Dosiervorrichtung in Vorderansicht;
- Fig. 2: dieselbe Spritze und die diese haltende Dosiervorrichtung in einer Seitenansicht;
- Fig. 3: die Spritze beim Einsetzen in den unteren Teil der Dosiervorrichtung in Vorderansicht.

Eine Spritze 1 hat einen Zylinder 2, der unten ein Röhrchen 3 mit einer Durchgangsöffnung 4 am unteren Ende aufweist. Oben hat der Zylinder 2 einen Flansch 5, der auf der Oberseite Erhebungen 6 und Vertiefungen 7 aufweist. Durch die spezielle Anordnung der Erhebungen 6 und Vertiefungen 7 ist eine Kennzeichnung der Spritze 1 gegeben, die deren Nennvolumen angibt. Am Außenumfang des Flansches 5 sind Führungsnuten 8 vorhanden, um die Spritze 1 in bestimmten Winkelstellungen in einer Aufnahme auszurichten.

Im Inneren der Spritze 1 ist ein Kolben 9 angeordnet, der unten einen abdichtend im Zylinder 2 geführten zylindrischen bzw. tellerförmigen Bereich 10 und eine damit verbundene Kolbenstange 11 aufweist. Die Kolbenstange 11 hat oben umlaufende Wulste 12, die der Fixierung des Kolbens 9 in einer Kolbenaufnahme dienen.

Eine Dosiervorrichtung 13 hat ein Gehäuse, in dem unten eine Steckaufnahme 14 für den Flansch 5 der Spritze 1 aufweist. In der Dosiervorrichtung 13 ist eine verschiebbare Kolbenaufnahme 15 für den Kolben vorhanden. Der Flansch 5 und die Kolbenstange 11 des Kolbens 9 werden mittels nicht gezeigter Greifeinrichtungen in der Dosiervorrichtung 13 gehalten.

Einzelheiten der Spritze 1 und der weiteren Halteeinrichtungen zum Halten der Spritze 1 in der Dosiervorrichtung 13 sind in der EP 0 656 229 B1 beschrieben, auf die insoweit Bezug genommen wird.

Ferner weist die Dosiervorrichtung 13 eine Abwerfertaste 16 auf, die es ermöglicht, die Halteeinrichtung zentral zu lösen. Einzelheiten dieses Zentralabwurfes für die Spritze 1 sind in der deutschen Patentanmeldung 10 2005 0023 203.5 beschrieben, deren diesbezügliche Ausführungen durch Bezugnahme in die vorliegende Anmeldung einbezogen sind.

Ferner umfaßt die Dosiervorrichtung eine Leseeinrichtung 17 zum Abtasten der Erhebungen 6 und Vertiefungen 7. Einzelheiten der Leseeinrichtung 17 und der Kennzeichnung der Spritzen 1 durch Erhebungen und Vertiefungen sind in der EP 0 657 216 B1 beschrieben, auf die insoweit Bezug genommen wird.

Die Dosiervorrichtung 13 umfaßt eine Antriebseinrichtung 18, die einen Elektromotor 19 aufweist. Der Elektromotor 19 ist über ein Getriebe 20 mit einer Hubstange 21 mit der Kolbenaufnahme 15 gekoppelt.

Ferner umfaßt die Dosiervorrichtung 13 eine elektronische Steuereinrichtung 22. Diese ist mit der elektrischen Antriebseinrichtung 18 elektrisch verbunden. Ferner ist sie mit einer Bedieneinrichtung 23 und einem Display 24 verbunden, die sich im Oberbereich der Dosiervorrichtung 13 befinden. Die Bedieneinrichtung 23 umfaßt einen Schiebeschalter 23.1 oder dgl. zum Einstellen einer Betriebsart der Dosiervorrichtung 13. Der Schiebeschalter ermöglicht eine Auswahl unter den Betriebsarten Titrieren, Pipettieren, Dispensieren, automatisches Dispensieren, Aspirieren und sequentielles Dispensieren.

Ferner umfaßt die Dosiervorrichtung 13 eine elektrische Spannungsversorgung 25 in Form eines Akkumulators. Der Akkumulator ist mittels eines externen Netzteiles aufladbar.

Im Titriermodus ist eine Bewegung des Kolbens 9 mit verschiedenen Geschwindigkeiten möglich. Bei jeder Betätigung einer Auslösetaste 23.2 der Dosiervorrichtung wird der Kolben 9 mit einer geringeren Geschwindigkeit gesteuert. Die Geschwindigkeiten auf jeder Stufe hängen ab vom Nennvolumen der Spritze 1, die die Leseeinrichtung 17 der Steuereinrichtung anzeigt.

Das Ausführungsbeispiel weist zehn verschiedene Geschwindigkeiten für die Bewegung des Kolbens 9 bei der Abgabe von Flüssigkeit im Titriermodus auf. Nachdem die kleinste Geschwindigkeitsstufe erreicht wird, wird durch eine weitere Betätigung der Auslösetaste 23.2 die Abgabe einer definierten kleinen Flüssigkeitsmenge im Freistrahl ausgelöst. Insgesamt stellt sich der Vorgang der Aufnahme und Abgabe von Flüssigkeit im Titriermodus folgendermaßen dar:

Für die Aufnahme von Flüssigkeit wird die Auslösetaste 23.2 einmal kurz gedrückt. Die Flüssigkeitsaufnahme wird durch eine zweite Betätigung der Auslösetaste 23.2 gestoppt. Anderenfalls wird automatisch Flüssigkeit entsprechend dem Nennvolumen der Spritze 1 aufgezogen.

Danach bewirkt eine weitere Betätigung der Auslösetaste 23.2 einen kleinen Umkehrhub, der ein Spiel zwischen Antriebseinrichtung 18 und Kolben 9 ausgleicht. Dabei wird eine geringe Menge der aufgezogenen Flüssigkeit verworfen.

Bei einer weiteren Betätigung der Auslösetaste wird der Kolben 9 zunächst mit maximaler Geschwindigkeit bewegt, solange, wie die Auslösetaste 23.2 gedrückt gehalten wird. Bei Loslassen der Auslösetaste 23.2 wird der Kolben angehalten.

Ein erneuter Druck auf die Auslösetaste 23.2 führt zu einem weiteren Bewegen des Kolbens 9 mit der zweithöchsten Geschwindigkeit.

Bei jeder weiteren Entlastung und Betätigung der Auslösetaste 23.2 wird eine niedrigere Geschwindigkeitsstufe erreicht, bis in der zehnten Stufe der Kolben 9 mit der geringsten Geschwindigkeit abgesenkt wird.

Danach bewirkt jede weitere Betätigung der Auslösetaste 23.2 die tröpfchenweise Abgabe von Flüssigkeit mit großer Geschwindigkeit. Die Tröpfchen haben ein Volumen, das etwa einem Tausendstel des Nennvolumens der Spritze 1 entspricht.

Durch Betätigung der Bedieneinrichtungen 23 ist es ferner möglich, von jeder Geschwindigkeitsstufe direkt auf die tröpfchenweise Abgabe von Flüssigkeit umzuschalten. Ferner ist auch durch geeignete Betätigung der Bedieneinrichtung 23 eine automatische Tröpfchenabgabe dergestalt möglich, daß in bestimmten Zeitabständen einzelne Tröpfchen abgegeben werden.

Dabei wird durch die kurze Betätigung der Auslösetaste 23.2 eine tröpfchenweise Abgabe gesteuert und durch eine anhaltende Betätigung der Auslösetaste 23.2 ein Vorfahren des Kolbens 9 bis zum Anschlag am unteren Ende des Zylinders 2. Nach Erreichen des Endpunktes ist es somit dem Anwender möglich, die noch in der Spritze 1 enthaltene Restlösung schnell zu verwerfen.

Die Anzeige 24 zeigt das insgesamt abgegebene Flüssigkeitsvolumen an, das die Steuereinrichtung 22 ermittelt. Zur Ermittlung des abgegebenen Flüssigkeitsvolumens wird die Bewegung des Elektromotors 19 mittels einer nicht gezeigten Anordnung aus einem Inkrementgeber und einem Sensor erfaßt.

Nach dem Titrieren kann die Spritze 1 leicht durch Betätigen der Abwerfertaste 16 abgeworfen werden.

## Patentansprüche

1. System zum Titrieren von Flüssigkeiten mit den folgenden Merkmalen:
- einer Spritze (1) oder Spitze, umfassend
- eine Halteeinrichtung und
- mindestens einem Kennzeichen (6, 7),
und
- einer Dosiervorrichtung (13), umfassend
- eine weitere Halteeinrichtung zum Halten der Spritze (1) oder Spitze an der Halteeinrichtung,
- eine Leseeinrichtung (17) zum Lesen des Kennzeichens (6, 7) der mittels der weiteren Halteeinrichtung gehaltenen Spritze (1) oder Spitze,
- eine einen Motor (19) aufweisende Antriebseinrichtung (18), die lösbar mit einem Kolben (9) der Spritze (1) gekoppelt ist, wenn diese von der weiteren Halteeinrichtung gehaltenen ist,
- oder die mit einem Kolben gekoppelt ist, der in einem Zylinder angeordnet ist, der über eine Fluidleitung mit der Spitze verbunden ist, wenn diese von der weiteren Halteeinrichtung gehalten ist,
- eine Bedieneinrichtung (23) zum Bedienen der Dosiervorrichtung (13) und
- eine mit der Bedieneinrichtung (23), der Leseeinrichtung (17) und der Antriebseinrichtung (18) verbundene Steuereinrichtung (22),
wobei die Steuereinrichtung (22) derart ausgebildet ist, dass sie die Bewegung des Kolbens (9) sowie die Geschwindigkeit und/oder Beschleunigung des Kolbens (9) in Abhängigkeit vom Kennzeichen (6, 7) der eingesetzten Spritze (1) oder Spitze steuert,
**dadurch gekennzeichnet, dass**
die Steuereinrichtung (22) so ausgebildet ist, dass sie bei Spritzen (1) oder Spitzen mit größerem Volumen in einigem Abstand vom Endpunkt eine geringere Geschwindigkeit und/oder eine geringere Beschleunigung des Kolbens (9) als bei Spritzen oder Spitzen mit geringerem Volumen steuert und bei Spritzen (1) oder Spitzen mit größerem Volumen in der Nähe des Endpunktes eine höhere Geschwindigkeit und/oder eine höherer Beschleunigung des Kolbens (9) als bei Spritzen (1) oder Spitzen mit geringerem Volumen steuert.

2. System nach Anspruch 1, bei dem das Kennzeichen (6, 7) mechanisch und/oder optisch abtastbar ist.

3. System nach Anspruch 2, bei dem die Leseeinrichtung (17) eine Einrichtung zum mechanischen und/oder optischen Abtasten ist.

4. Vorrichtung nach einem der Ansprüche 1 bis 3, bei der das Kennzeichen (6, 7) an einem Flansch (5) der Spritze (1) oder Spitze und/oder an einem Kolben (9) der Spritze angeordnet ist.

5. System nach einem der Ansprüche 1 bis 4, bei dem das Kennzeichen (6, 7) das Nennvolumen und/oder die Bauart und/oder das Material und/oder den Reinheitsgrad und/oder den Hersteller und/oder das Herstellungsdatum und/oder erfolgte Benutzungen der Spritze (1) oder Spitze angibt.

6. System nach einem der Ansprüche 1 bis 5, bei dem die Steuereinrichtung (22) in einen Titriermodus und/oder in einen Dispensiermodus und/oder in einen Pipettiermodus und/oder in einen Aspirationsmodus und/oder in einen sequentiellen Dispensiermodus schaltbar ist.

7. System nach einem der Ansprüche 1 bis 6, wobei die
- Steuereinrichtung (22) dazu ausgebildet ist, in einer ersten Abgabephase eine Bewegung des Kolbens (9) für die Abgabe großer Flüssigkeitsmengen zu steuern und, ausgelöst durch eine Betätigung der Bedienungseinrichtung (23) oder durch das Erreichen des Endes der ersten Abgabephase, in einer zweiten Abgabephase eine Bewegung des Kolbens (9) für die Abgabe mindestens einer kleinen definierten Flüssigkeitsmenge zu steuern.

8. Verfahren zum Titrieren von Flüssigkeiten mit einem System zum Titrieren von Flüssigkeiten mit
- einer Spritze (1) oder Spitze, umfassend
- eine Halteeinrichtung, und
- mindestens einem Kennzeichen (6,7)
und
- einer Dosiervorrichtung (13), umfassend
- eine weitere Halteeinrichtung zum Halten der Spritze (1) oder Spitze an der Halteeinrichtung,
- eine Leseeinrichtung(17) zum Lesen des Kennzeichens (6, 7) der mittels der weiteren Halteeinrichtung gehaltenen Spritze (1) oder Spitze,
- eine einen Motor (19) aufweisende Antriebseinrichtung (18), die lösbar mit einem Kolben (9) der Spritze (1) gekoppelt ist, wenn diese von der weiteren Halteeinrichtung gehalten ist, oder die mit einem Kolben gekoppelt ist, der in einem Zylinder angeordnet ist, der über eine Fluidleitung mit der Spitze verbunden ist, wenn diese von der weiteren Halteeinrichtung gehalten ist,
- eine Bedieneinrichtung (23) zum Bedienen der Dosiervorrichtung (13) und
- eine mit der Bedieneinrichtung (23), der Leseeinrichtung (17) und der Antriebseinrichtung (18) verbundene Steuereinrichtung (22),
bei dem
- eine Spritze oder Spitze mit mindestens einem Kennzeichen lösbar mit einer Dosiervorrichtung verbunden wird,
- die Dosiervorrichtung mindestens ein Kennzeichen von der Spritze oder Spitze liest,
- die Dosiervorrichtung einen Kolben der Spritze oder einen Kolben in einem Zylinder, der mit der Spitze verbunden ist, in Abhängigkeit von einer Eingabe des Anwenders bewegt sowie die Geschwindigkeit und/oder die Beschleunigung des Kolbens in Abhängigkeit vom Kennzeichen der eingesetzten Spritze oder Spitze steuert,
**dadurch gekennzeichnet, dass**
- die Steuereinrichtung (22) der Dosiervorrichtung bei Spritzen (1) oder Spitzen mit größerem Volumen in einigem Abstand vom Endpunkt eine geringere Geschwindigkeit und/oder eine geringere Beschleunigung des Kolbens (9) als bei Spritzen oder Spitzen mit geringerem Volumen steuert und bei Spritzen (1) oder Spitzen mit größerem Volumen in der Nähe des Endpunktes eine höhere Geschwindigkeit und/oder eine höhere Beschleunigung des Kolbens (9) als bei Spritzen (1) oder Spitzen mit geringerem Volumen steuert.

9. Verfahren nach Anspruch 8, bei dem die Dosiervorrichtung das Kennzeichen mechanisch und/oder optisch von der Spritze oder Spitze abtastet.

10. Verfahren nach Anspruch 8 oder 9, bei dem die Spritze oder Spitze mit einem das Nennvolumen und/oder die Bauart und/oder das Material und/oder den Reinheitsgrad und/oder den Hersteller und/oder das Herstellungsdatum und/oder erfolgte Benutzungen der Spritze oder Spitze betreffenden Kennzeichen versehen wird.

11. Verfahren nach einem der Ansprüche 8 bis 10, bei dem unter einer oder mehrerer Betriebsweisen ausgewählt aus Titriermodus, Dispensiermodus, Pipettiermodus, Aspirationsmodus und sequentieller Dispensiermodus eine Betriebsweise der Dosiervorrichtung ausgewählt wird.

## Claims

1. A system for titrating liquids with the following features:
• a syringe (1) or tip, comprising
• a holding device
• and at least one tag (6, 7)
and
• a metering equipment (13) comprising
• an additional holding device for holding the syringe (1) or tip on the holding device,
• a reading device (17) for reading of the tag (6, 7) of the syringe (1) or tip held by the additional holding device,
• a driving device (18) having a motor (19),
• the driving device (18) with a motor (19) being detachable coupled with a plunger (9) of the syringe (1) when the same is held by the additional holding device, or which is coupled with a plunger which is arranged in a cylinder which is coupled with the tip via a fluid conduit, when the same is held by the additional holding device,
• an operating device (23) for operating the metering equipment (13),
• a control device (22) is connected with the operating device (23), the reading device and the driving device (18) and is constructed and arranged to control a movement of the plunger (9) as well as the speed and/or acceleration thereof in dependence upon the tag (6, 7) of the applied syringe (1) or tip,
**characterized in that**
the control device (22) is constructed such that with syringes (1) or tips with larger volumes at a certain distance from the end point are controlled to attain a smaller speed and/or smaller acceleration than with syringes or tips with a smaller volume and with syringes (1) or tips with a larger volume near the end point are controlled to attain a higher speed and/or acceleration of the plunger (9) than with syringes (1) or tips having a smaller volume.

2. A system of claim 1, wherein the tag (6, 7) is adapted to be scanned mechanically and/or optically.

3. A system of claim 2, wherein the reading device (17) is a device for mechanically and/or optical scanning.

4. A system according to any one of the claims 1 to 3, wherein the tag (6, 7) is provided at a flange (5) of the syringe (1) or tip and/or a collar at a plunger (9) of the syringe (1).

5. A system of one of the claims 1 to 4, wherein the tag (6, 7) indicates the nominal volume and/or the construction and/or the material and/or the purity and/or the producer and/or the date of production and/or the number of uses of the syringe or tip.

6. A system of one of the claims 1 to 5, wherein the control device (22) can be switched into a titration mode and/or in a dispensing mode and/or in a pipetting mode and/or in an aspiration mode and/or in a sequential dispensing mode.

7. The system of one of the claims 1 to 6, wherein
• the control device (22) is designed to control the movement of plunger (9) in a first delivery phase for the delivery of larger liquid amounts and initiated by the actuation of the operation device (23) or by the reaching of the end of the first delivery phase to control the movement of plunger (9) in a second delivery phase for the delivery of at least smaller defined liquid amount.

8. A method for titrating liquids with a system for titrating liquids comprising
• a syringe (1) or tip, comprising
• a holding device, and
• at least one tag (6, 7)
and
• a metering equipment (13), comprising
• an additional holding device for holding the syringe (1) or tip on the holding device,
• a reading device for reading of the tag (6, 7) of the syringe or tip held by the additional measuring device,
• a driving device (18) having a motor (19), the driving device (18) being detachably coupled with a plunger (9) of the syringe (1) when the same is held by the additional holding device, or which is coupled with a plunger which is arranged in a cylinder which is coupled with the tip via a fluid conduit, when the same is held by the additional holding device,
• an operating device (23) for operating the metering equipment (13), and
• a control device (22) connected with the operating device (23), the reading device and the driving device (18),
wherein
• a syringe or tip having at least one tag is detachably connected to a metering equipment,
• the metering device reads at least one tag of the syringe or tip,
• the metering device moves a plunger of the syringe or a plunger in a cylinder connected to the tip in dependence upon an input of the user and controls the speed and/or acceleration of the plunger in dependence upon the tag of the syringe or tip applied to,
**characterized in that**
• the control device (22) of the metering device with syringes (1) or tips having a larger volume controls the plunger at a certain distance from the end point to attain a smaller speed and/or smaller acceleration than with syringes or tips having a smaller volume and with syringes (1) or tips having a larger volume controls the plunger to attain a higher speed and/or acceleration near the end point than with syringes (1) or tips having a smaller volume.

9. The method of claim 8, wherein the metering device scans the tag of the syringe or tip mechanically and/or optically.

10. The method of claim 8 or 9, wherein the syringe or tip is provided with a tag indicating the nominal volume and/or structural specification and/or the material and/or the purity and/or the producer and/or the production date and/or the number of uses of the syringe or the tip.

11. The method of one of the claims 8 to 10, wherein among one or a plurality of operational modes selected from titration mode, dispensing mode, pipetting mode, aspiration mode or sequential dispensing mode and operation mode for the metering device is selected.

## Revendications

1. Système de titrage de liquides présentant les caractéristiques suivantes :
• une seringue (1) ou pointe, comprenant
• un dispositif de maintien et
• au moins un signe distinctif (6, 7),
et
• un dispositif de dosage (13), comprenant
• un autre dispositif de maintien pour maintenir la seringue (1) ou pointe sur le dispositif de maintien,
• un dispositif de lecture (17) pour lire le signe distinctif (6, 7) de la seringue (1) ou pointe maintenue au moyen de l'autre dispositif de maintien,
• un dispositif d'entraînement (18), comportant un moteur (19), qui est couplé de façon détachable à un piston (9) de la seringue (1) quand celle-ci est maintenue par l'autre dispositif de maintien,
• ou qui est couplé à un piston qui est disposé dans un cylindre qui est connecté par le biais d'une conduite de fluide à la pointe quand celle-ci est maintenue par l'autre dispositif de maintien,
• un dispositif de commande (23) pour commander le dispositif de dosage (13) et
• un dispositif de régulation (22) connecté au dispositif de commande (23), au dispositif de lecture (17) et au dispositif d'entraînement (18),
le dispositif de régulation (22) étant constitué de telle sorte qu'il régule le déplacement du piston (9) ainsi que la vitesse et/ou l'accélération du piston (9) en fonction du signe distinctif (6, 7) de la seringue (1) ou pointe introduite,
**caractérisé en ce que**
le dispositif de régulation (22) est constitué de telle sorte que, en présence de seringues (1) ou pointes de volume assez important, il régule, à quelque distance du point extrême, une vitesse plus faible et/ou une accélération plus faible du piston (9) qu'en présence de seringues ou pointes de volume assez faible et, en présence de seringues (1) ou pointes de volume assez important, il régule à proximité du point extrême une vitesse plus élevée et/ou une accélération plus élevée du piston (9) qu'en présence de seringues (1) ou pointes de volume assez faible.

2. Système selon la revendication 1, dans lequel le signe distinctif (6, 7) peut être exploré mécaniquement et/ou optiquement.

3. Système selon la revendication 2, dans lequel le dispositif de lecture (17) est un dispositif d'exploration mécanique et/ou optique.

4. Dispositif selon l'une des revendications 1 à 3, dans lequel le signe distinctif (6, 7) est disposé sur une bride (5) de la seringue (1) ou pointe et/ou sur un piston (9) de la seringue.

5. Système selon l'une des revendications 1 à 4, dans lequel le signe distinctif (6, 7) indique le volume nominal et/ou le type de construction et/ou le matériau et/ou le degré de pureté et/ou le fabricant et/ou la date de fabrication et/ou les utilisations effectuées de la seringue (1) ou pointe.

6. Système selon l'une des revendications 1 à 5, dans lequel le dispositif de régulation (22) peut être commuté dans un mode de titrage et/ou dans un mode de distribution et/ou dans un mode de pipetage et/ou dans un mode d'aspiration et/ou dans un mode de distribution séquentiel.

7. Système selon l'une des revendications 1 à 6,
• le dispositif de régulation (22) étant constitué pour, dans une première phase de délivrance, réguler un déplacement du piston (9) pour la délivrance de grandes quantités de liquide et, déclenché par un actionnement du dispositif de commande (23) ou par l'atteinte de la fin de la première phase de délivrance, réguler dans une deuxième phase de délivrance un déplacement du piston (9) pour la délivrance d'au moins une petite quantité de liquide définie.

8. Procédé de titrage de liquides avec un système de titrage de liquides, avec
• une seringue (1) ou pointe, comprenant
• un dispositif de maintien et
• au moins un signe distinctif (6, 7),
et
• un dispositif de dosage (13), comprenant
• un autre dispositif de maintien pour maintenir la seringue (1) ou pointe sur le dispositif de maintien,
• un dispositif de lecture (17) pour lire le signe distinctif (6, 7) de la seringue (1) ou pointe maintenue au moyen de l'autre dispositif de maintien,
• un dispositif d'entraînement (18), comportant un moteur (19), qui est couplé de façon détachable à un piston (9) de la seringue (1) quand celle-ci est maintenue par l'autre dispositif de maintien, ou qui est couplé à un piston qui est disposé dans un cylindre qui est connecté par le biais d'une conduite de fluide à la pointe quand celle-ci est maintenue par l'autre dispositif de maintien,
• un dispositif de commande (23) pour commander le dispositif de dosage (13) et
• un dispositif de régulation (22) connecté au dispositif de commande (23), au dispositif de lecture (17) et au dispositif d'entraînement (18),
dans lequel
• une seringue ou pointe avec au moins un signe distinctif est connectée de façon détachable à un dispositif de dosage,
• le dispositif de dosage lit au moins un signe distinctif de la seringue ou pointe,
• le dispositif de dosage déplace un piston de la seringue ou un piston dans un cylindre qui est connecté à la pointe en fonction d'une entrée de l'utilisateur de même qu'il régule la vitesse et/ou l'accélération du piston en fonction du signe distinctif de la seringue ou pointe introduite,
**caractérisé en ce que**
• en présence de seringues (1) ou pointes de volume assez important, le dispositif de régulation (22) du dispositif de dosage régule, à quelque distance du point extrême, une vitesse plus faible et/ou une accélération plus faible du piston (9) qu'en présence de seringues (1) ou pointes de volume assez faible et, en présence de seringues (1) ou pointes de volume assez important, il régule à proximité du point extrême une vitesse plus élevée et/ou une accélération plus élevée du piston (9) qu'en présence de seringues (1) ou pointes de volume assez faible.

9. Procédé selon la revendication 8, dans lequel le dispositif de dosage explore mécaniquement et/ou optiquement le signe distinctif de la seringue ou pointe.

10. Procédé selon la revendication 8 ou 9, dans lequel la seringue ou pointe est munie d'un signe distinctif concernant le volume nominal et/ou le type de construction et/ou le matériau et/ou le degré de pureté et/ou le fabricant et/ou la date de fabrication et/ou les utilisations effectuées de la seringue ou pointe.

11. Procédé selon l'une des revendications 8 à 10, dans lequel un mode de fonctionnement du dispositif de dosage est sélectionné parmi un ou plusieurs modes de fonctionnement sélectionnés parmi le mode de titrage, le mode de distribution, le mode de pipetage, le mode d'aspiration et le mode de distribution séquentiel.
